# EUROPEAN PATENT APPLICATION

(11) **EP 3 037 740 A1**
(43) Date of publication of application: **29.06.2016**
(21) Application number: 15201327.2
(22) Date of filing: 18.12.2015
(51) Int. Cl.: F24F 11/00

(54) **AIR CONDITIONING SYSTEM COMPRISING A CONTROL DEVICE AND METHOD OF CONTROLLING AN AIR CONDITIONER**

(30) Priority: 19.12.2014 JP 2014258078
(71) Applicant: Mitsubishi Heavy Industries, Ltd., Tokyo 108-8215 (JP)
(72) Inventor: ISHIZUKA, Hirofumi, TOKYO, 108-8215 (JP)
(74) Representative: Intès, Didier Gérard André

(57) **Abstract**

Provided is an air conditioning system (10; 10a) that includes at least one indoor unit (12; 12a, 12b), a control device (18) configured to control the indoor unit (12; 12a, 12b), an operation device (12; 12a, 12b; 16c) including a display section (32) configured to display an operation screen, and an operation section (34, 36a, 36b) for inputting operation. The operation section (34, 36a, 36b) includes a specific button. The control device (18) switches an item displayed on the display section (32) and displays an operation item associated in a multi-layer based on operation to the operation section (34, 36a, 36b). The control device (18) then controls operation of the indoor unit (12; 12a, 12b) based on operation detected by the operation section (34, 36a, 36b) while the operation item is being displayed. The control device (18) is capable of associating the item displayed by two or more times of operation from an operation start screen with the operation item associated with the specific button. The control device (18) displays the operation item associated with the specific button in a case where the specific button has been operated at a time of displaying the operation start screen.

## Description

### Field

The present invention relates to an air conditioning system, an operation device for operating a control device of an air conditioning system and an operation method of an air conditioning system, including an indoor unit, a control device configured to control the indoor unit, and an operation device for inputting operation.

### Background

An air conditioning system includes an indoor unit, a control device configured to control the indoor unit, and an operation device for inputting operation. The air conditioning system further includes an outdoor unit connected to the indoor unit. In the air conditioning system, a user inputs operation. The control device controls operation of the indoor unit based on the operation input by the user. With this configuration, cooling and heating of an area in which the indoor unit is installed is performed.

Some of the air conditioning systems improve operability by setting a method for inputting on the operation device. Patent Literature 1, for example, describes operation using a wind speed key and an abbreviation key. The wind speed key is used to select a wind speed to be set on a remote control device capable of communicating with the indoor apparatus. The abbreviation key is used to perform operation under operation conditions including a previously registered operation mode, a set temperature, and a set wind speed. When the abbreviation key has been selected, the air conditioning system operates according to the operation condition corresponding to information on a date on which the abbreviation key is selected.

### Citation List

### Patent Literature

Patent Literature 1: JP 2014-20660 A

### Summary

### Technical Problem

With an abbreviation function, it is possible to switch to a setting desirable for a user. In recent years, there are a wide range of operation modes available to be set on the air conditioning system. Accordingly, it is not easy with an abbreviation mode setting to switch operation appropriately for each situation. Furthermore, if the setting has once been made with the abbreviation mode, switching a part of the mode thereafter would need a plurality of times of operation in order to reach the operation of the menu, causing complexity of operation.

The present invention is intended to solve the above-described problem. An object of the invention is to provide an air conditioning system, an operation device for operating a control device of an air conditioning system and an operation method of an air conditioning system, with good operability for the user.

### Solution to Problem

According to an aspect of the present invention, an air conditioning system includes: at least one indoor unit; a control device configured to control the indoor unit; an operation device including a display section configured to display an operation screen and an operation section configured to input an operation. The operation section includes a specific button. The control device is configured to switch an item displayed on the display section and display an operation item associated in a multi-layer based on the operation to the operation section, control the operation of the indoor unit based on the operation detected by the operation section while the operation item is being displayed, be capable of associating the item displayed by two or more times of operation from an operation start screen with the operation item associated with the specific button, and display the operation item associated with the specific button in a case where the specific button has been operated at a time of displaying the operation start screen.

Advantageously, the air conditioning system includes the plurality of indoor units. The control device is configured to be capable of associating operation for each of the plurality of indoor units with the operation items associated with the specific button. Associating the operations for the respective indoor units to the operation items associated with the specific button include both determining the operations by the operation items associated with the specific button and starting the operations by the operation items associated with the specific button.

Advantageously, in the air conditioning system, the control device is configured to be capable of associating operation for each of the plurality of indoor units with one operation item associated with the specific button. Associating the operations for respective indoor units to one operation item associated with the specific button include both determining the operations by the one operation item associated with the specific button and starting the operations by the one operation item associated with the specific button.

Advantageously, in the air conditioning system, the control device is configured to be capable of associating a plurality of operation items to the operation item associated with the specific button. Associating the plurality of operation items to the operation items associated with the specific button include determining the operations by the operation items associated with the specific button and starting the operations corresponding to the operation items by the operation items associated with the specific button.

Advantageously, in the air conditioning system, the control device is configured to be capable of associating a plurality of operation items to one operation item associated with the specific button. Associating the plurality of operation items to one operation item associated with the specific button include determining the operations by the one operation item associated with the specific button and starting the operations corresponding to the operation items by the one operation item associated with the specific button.

Advantageously, in the air conditioning system, the control device includes history data storing a history of an operation item operated on the operation device, and when the control device has detected operation for setting the operation item associated with the specific button, the control device is configured to display the operation item extracted based on the history data.

Advantageously, in the air conditioning system, the operation item associated with the specific button is an item configured to switch start and stop of a function.

Advantageously, in the air conditioning system, the operation section includes a touch panel laminated at the display section, and the specific button is a physical switch arranged in a position not overlapping with the display section.

According to another aspect of the present invention, an operation device for operating a control device of an air conditioning system comprising: a display section configured to display an operation screen; and an operation section configured to input an operation, wherein the operation section includes a specific button.

According to still another aspect of the present invention, the operation device of any one of the above comprising: the specific button included by the operation section wherein the control device is configured to be capable of associating operation for each of the plurality of indoor units with the operation items associated with the specific button.

According to still another aspect of the present an operation method for an air conditioning system including at least one indoor unit, a control device configured to control the indoor unit, an operation device (12; 12a, 12b; 16c) including a display section configured to display an operation screen and an operation section configured to input an operation, wherein when the operation section operates the air conditioning system including a specific button, the control device associates the item displayed by two or more times of operation from an operation start screen to the operation item associated with the specific button, switches an item displayed on the display section (32) and display an operation item associated in a multi-layer based on the operation to the operation section (34, 36a, 36b), control the operation of the indoor unit (12; 12a, 12b) based on the operation detected by the operation section (34, 36a, 36b) while the operation item is being displayed, and displays the operation item associated with the specific button in a case where the specific button has been operated at a time of displaying the operation start screen.

### Advantageous Effects of Invention

According to the present invention, it is possible to provide good operability for the user.

### Brief Description of Drawings

FIG. 1 is a schematic diagram illustrating an outline configuration of an air conditioning system according to an embodiment of the present invention.
FIG. 2 is a schematic diagram illustrating an exemplary operation device.
FIG. 3 is a block diagram illustrating an exemplary control device.
FIG. 4 is a diagram illustrating exemplary operation of the air conditioning system.
FIG. 5 is a diagram illustrating exemplary operation of the air conditioning system.
FIG. 6 is a flow chart illustrating exemplary operation of the air conditioning system.
FIG. 7 is a diagram illustrating exemplary operation of the air conditioning system.
FIG. 8 is a flow chart illustrating exemplary operation of the air conditioning system.
FIG. 9 is a diagram illustrating exemplary operation of the air conditioning system.
FIG. 10 is a diagram illustrating exemplary operation of the air conditioning system.
FIG. 11 is a diagram illustrating exemplary operation of the air conditioning system.
FIG. 12 is a flow chart illustrating exemplary operation of the air conditioning system.
FIG. 13 is a schematic diagram illustrating an outline configuration of the air conditioning system according to another embodiment.

### Description of Embodiments

Hereinafter, an embodiment of the present invention will be described in detail with reference to the drawings. The present invention is not limited by the present embodiment. Components of the embodiments described below include a component that is replaceable or easily replaced by a person skilled in the art, or that is substantially identical to the component.

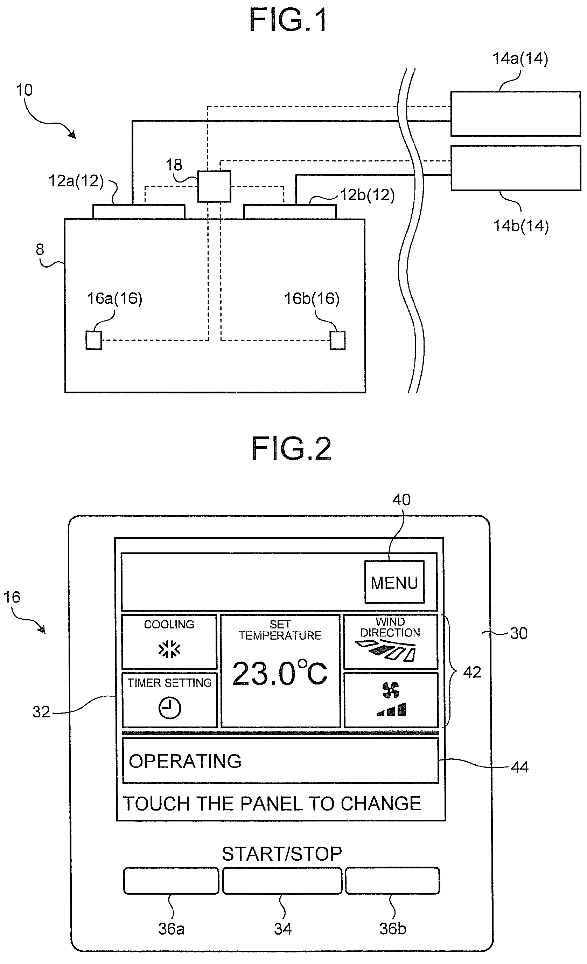

FIG. 1 is a schematic diagram illustrating an outline configuration of an air conditioning system according to an embodiment of the present invention. An air conditioning system 10 of the embodiment is configured such that a plurality of indoor units is arranged in a room 8. The air conditioning system 10 illustrated in FIG. 1 includes the two indoor units. The number of indoor units, however, is not limited in particular.

The air conditioning system 10 illustrated in FIG. 1 includes indoor units 12a and 12b, outdoor units 14a and 14b, operation devices 16a and 16b, and a control device 18. Hereinafter, the indoor units 12a and 12b, the outdoor units 14a and 14b, the operation devices 16a and 16b will be described as the indoor unit 12, the outdoor unit 14, and the operation device 16, respectively, where distinction between the pair is not needed.

The indoor units 12a and 12b are installed in separate positions in the same room 8. The indoor unit 12 is basically installed indoors and supplies temperature-adjusted or humidity-adjusted air to the room, thereby performing cooling, heating, dehumidification, or the like. The indoor unit 12 according to the present embodiment is arranged on a ceiling of the room 8.

The outdoor unit 14a is connected to the indoor unit 12a. The outdoor unit 14b is connected to the indoor unit 12b. The outdoor unit 14 is disposed outside the room 8, typically disposed outdoors. The outdoor unit 14 cools or heats a cooling medium (heating medium) and cause the cooling medium (heating medium) to circulate between the outdoor unit 14 and the indoor unit 12. This configuration achieves a cooling function, a heating function, and a dehumidification function at the indoor unit 12. According to the present embodiment, each of the indoor units 12a and 12b has one corresponding outdoor unit 14. Alternatively, one outdoor unit may be arranged for the plurality of indoor units.

The operation devices 16a and 16b are devices into which a user inputs operation. According to the present embodiment, there are two operation devices 16a and 16b. Alternatively, however, it is allowable to provide one instead of two. The number of operation devices 16a and 16b, and the number of indoor units 12a and 12b may be the same or different. In other words, the number of operation devices 16 may be smaller than, the same as, or greater than, the number of the indoor units 12. The operation device 16 is a terminal installed on a wall of the room 8. The operation device 16 is a device into which various kinds of operation can be input. The operation includes a mode such as cooling, drying, dehumidification, heating, as well as a set temperature, a wind volume, a wind direction, a starting timer, and a stopping timer.
The operation device 16 is connected to the control device 18, and transmits the input operation to the control device 18.

The operation device 16 includes a display section for displaying an image and an operation section for inputting operation. FIG. 2 is a schematic diagram illustrating an exemplary operation device. The operation device 16, as illustrated in FIG. 2, includes a housing 30, a touch panel display device 32, an operation button 34, and preference buttons 36a and 36b. On the operation device 16, the touch panel display device 32 has a combined function of the display section and the operation section. The operation button 34 and the preference buttons 36a and 36b have a function of the operation section.

The housing 30 is installed on a wall of the room 8. In the housing 30, the touch panel display device 32, the operation button 34, and the preference buttons 36a and 36b are arranged. The housing 30 may have an openable/closable cover that covers the touch panel display device 32.

The touch panel display device 32 is constituted by a lamination of a touch panel for detecting operation and a display device for displaying an image. The touch panel display device 32 includes, on its screen, a menu button 40, a basic item unit 42, and a message display field 44. The menu button 40 is operated by a user when the user performs detailed setting. When the menu button 40 is operated, the operation device 16 displays detailed setting items. The basic item unit 42 displays a button that corresponds to each of the items of an operation mode, timer settings, a set temperature, a wind direction, and a wind volume. Each of the buttons displays current setting information. When the button of the basic item unit 42 is operated, the operation device 16 displays a setting screen for the item operated. The message display field 44 displays information on current operation, for which notification is needed. In FIG. 2, a message "Operating" is displayed, which indicates the device is in operation. Herein, the operation device 16 employs the touch panel display device 32, although the display section and the operation section may be provided separately. For example, a plurality of buttons may be provided adjacent to the display section. It is possible to configure such that operation items may be displayed at the display section corresponding to each of the buttons, and operation for various functions may be input from the corresponding button.

The operation button 34 and the preference buttons 36a and 36b are arranged so as not to overlap with the touch panel display device 32. The operation button 34 and the preference buttons 36a and 36b are physical switches that detect physical changes including a state of being pressed, and are fixed to the housing 30. The operation button 34 is a button with which operation for switching operating (starting)/stopping of the indoor unit 12 is associated. With the preference buttons 36a and 36b, operation for displaying a screen that displays operation items set in preference operation described below, and operation to switch start and stop, namely, on/off of the operation items set in the preference operation are associated. The preference buttons 36a and/or 36b corresponds to a specific button. The preference buttons 36a and 36b will be described below.

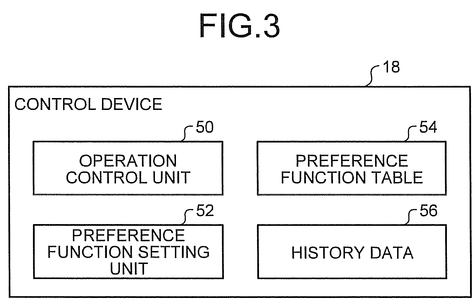

FIG. 3 is a block diagram illustrating an exemplary control device. The control device 18 controls operation of each of components of the air conditioning system 10. The control device 18 includes an arithmetic processing function and a storage function. The control device 18 includes, as illustrated in FIG. 3, an operation control unit 50, a preference function setting unit 52, a preference function table 54, and a history data 56.

The operation control unit 50 controls operation of the indoor unit 12. The operation control unit 50, based on setting, controls operation of the indoor unit 12 and the outdoor unit 14. For operation of the indoor unit 12, the operation control unit 50 controls the wind volume, the wind direction, and whether to blow warm air, cool air, or just air.

The preference function setting unit 52 performs setting of a preference function. Specifically, the preference function setting unit 52 associates the operation item with the preference function based on the operation input into the operation device 16. The preference function is an operation item that has been set after being selected from among various modes (operation items) executable by the air conditioning unit. The preference function setting unit 52 extracts settable conditions at setting the preference function, based on various constraints stored in the preference function table 54. The preference function setting unit 52, then, sets the operation items that have been set based on extractable conditions, to the preference function.

The preference function table 54 stores information needed for setting the preference function. Specifically, the preference function table 54 stores information on the operation items settable for the preference function among a large number of operation items of the air conditioning system 10. The preference function table 54 stores the operation items for which switching operation of start and stop is to be performed, among a large number of operation items of the air conditioning system 10. The preference function table 54 stores association of set operation item and the preference buttons 36a and 36b. The preference function table 54 also stores association of set the operation item and the item to be displayed on the touch panel display device 32. The history data 56 stores a history of various operation that has been input into the operation device 16.

The control device 18 includes a processing unit and a storage unit. The processing unit includes the operation control unit 50 and the preference function setting unit 52. The storage unit stores the preference function table 54 and a history data 56. The processing unit may be CPU (Central Processing Unit), a microprocessor, a microcomputer and so on.

The processing unit may be configured to be a dedicated hardware such as a single circuit, a complex circuit, a programed processor, a parallelized processor, ASIC (Application Specific Integrated Circuit) or FPGA (Field Programmable Gate Array) or their combination.

The storage unit may be at least one of a volatile or non-volatile semiconductor memory such as RAM (Random Access Memory), ROM (Random Access Memory), flash memory, EPROM (Erasable Programmable Random Access Memory) and EEPROM (Electrically Erasable Programmable Random Access Memory), magnetic disk, flexible disk, and magnetic optical disk. The storage unit stores a computer program to have the processing unit perform an operation method of the air conditioning system of the embodiment and information used for the processing unit to perform the operation method of the air conditioning system of the embodiment. This information includes the preference function table 54 and a history data 56. The processing unit reads and executes the computer program from the storage unit to perform the method of the operation method of the air condition system.

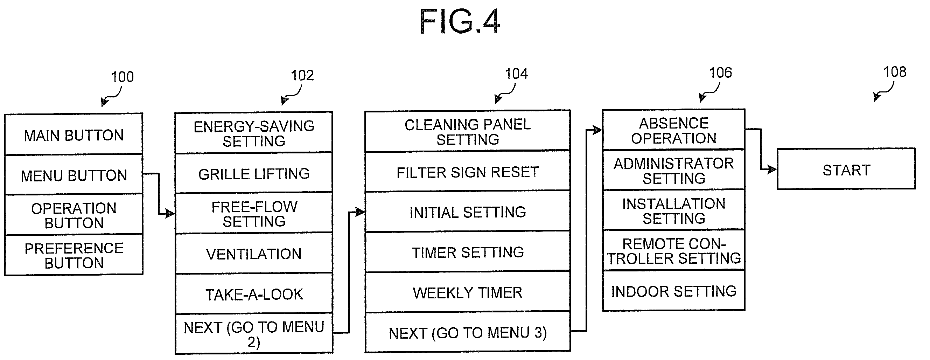

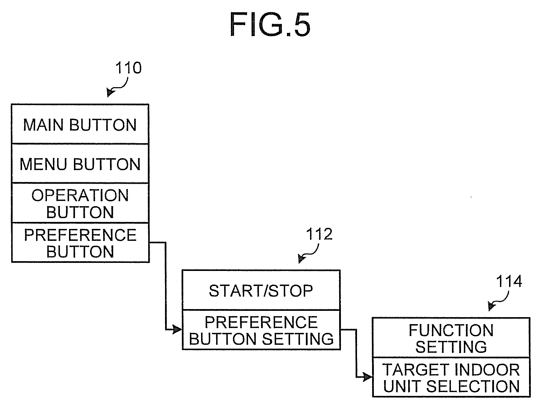

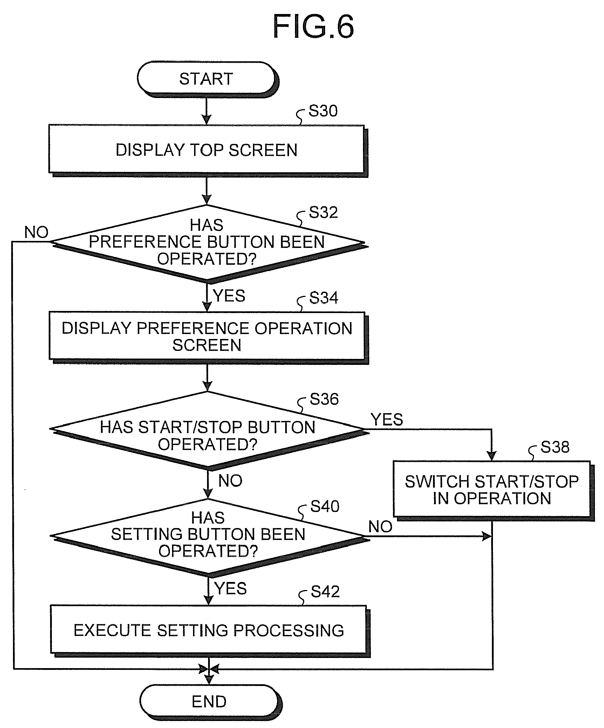

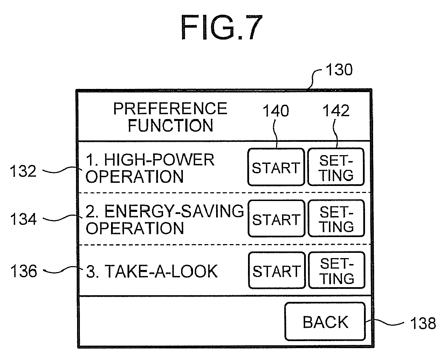

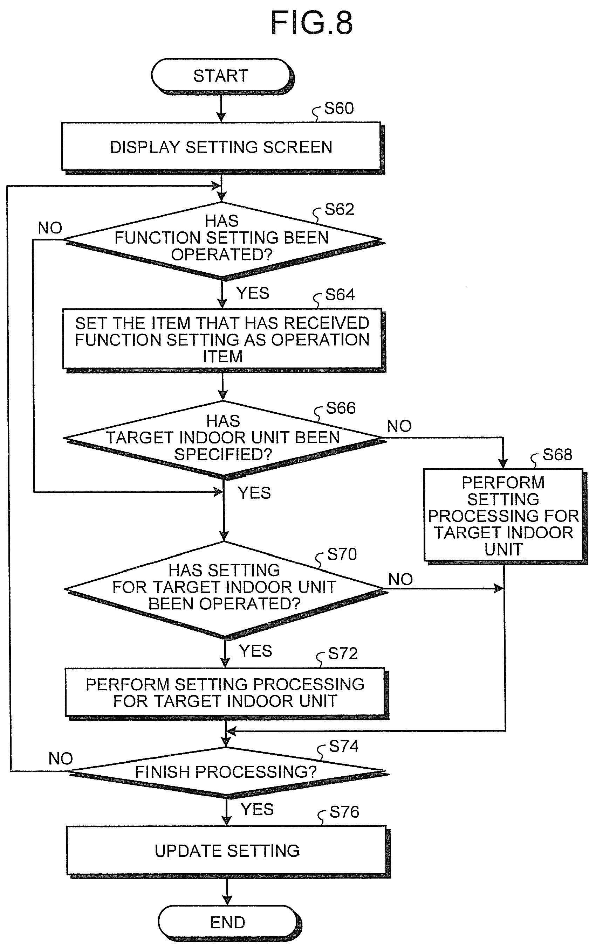

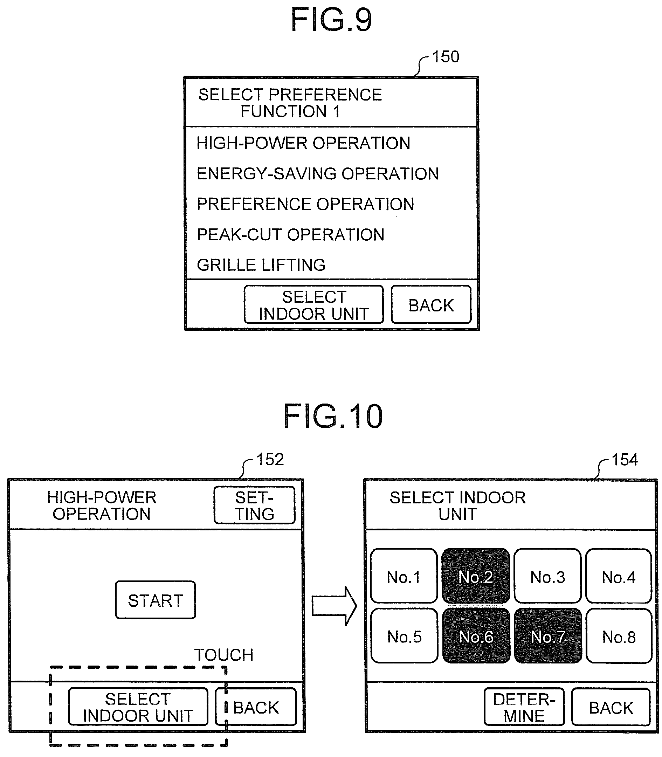

Next, operation of the air conditioning system 10 will be described with reference to FIGS. 4 to 11. Specifically, the preference function of the air conditioning system 10 and setting operation of the preference function will be described. FIG. 4 is a diagram illustrating exemplary operation of the air conditioning system. FIG. 5 is a diagram illustrating exemplary operation of the air conditioning system. FIG. 6 is a flow chart illustrating exemplary operation of the air conditioning system. FIG. 7 is a diagram illustrating exemplary operation of the air conditioning system. FIG. 8 is a flow chart illustrating exemplary operation of the air conditioning system. FIGS. 9 to 11 are diagrams for illustrating exemplary operation of the air conditioning system.

First, exemplary control for switching operation modes will be described with reference to FIG. 4. FIG. 4 is a diagram illustrating a transition of the item to be displayed on the touch panel display device 32. A screen transition illustrated in FIG. 4 is an example. The control device 18 initially displays a top screen. The top screen is an initial screen that is displayed when no operation has been input. The top screen is also referred to as an operation starting screen. The top screen is displayed immediately after starting or when the screen returns from a black-out screen. The control device 18 displays an item unit 100 on the top screen. The button of the item unit 100, in this embodiment, at least one of the main button, the menu button, the operation button and the preference button, corresponds to the specific button. The item unit 100 displays a main button, a menu button, an operation button, and a preference button. With the main button, operation for displaying the screen illustrated in FIG. 2 is associated. With the menu button, operation for displaying a set menu item is associated. With the operation button, operation to switch start/stop of the air conditioning system 10 is associated. The preference button will be described below. Herein the control device 18 may be configured such that the operation button is used for the operation button 34, the preference button is used for the preference buttons 36a and 36b, and an image button need not be displayed on the touch panel display device 32.

When the menu button is pressed while the item unit 100 is being displayed, the control device 18 displays an item unit 102. The item unit 102 includes, as operation items, energy-saving setting, grille lifting, free-flow setting, ventilation, take-a-look, and next (go to menu 2).

When the next (go to menu 2) is pressed while the item unit 102 is being displayed, the control device 18 displays an item unit 104. The item unit 104 includes, as operation items, cleaning panel setting, filter sign reset, initial setting, timer setting, weekly setting, and next (go to menu 3).

When the next (go to menu 3) is pressed while the item unit 104 is being displayed, the control device 18 displays an item unit 106. The item unit 106 includes, as operation items, absence operation, administrator setting, installation setting, remote controller setting, and indoor setting.

When the absence operation is operated while the item unit 106 is being displayed, the control device 18 displays an item unit 108. The item unit 108 includes, as operation items, "start" associated with starting of the absence operation. The "start" is operated while the item unit 108 is being displayed, the control device 18 starts the absence operation.

The control device 18 displays the operation items associated in a multi-layer way and controls the operations of the indoor units 12a and 12b based on the operations which the operation unit detects in a state that the operation items are displayed. In particular, respective item units 100, 102, 104, 106, 108 including the operation items are layered or hierarchized, and the operation item of a layer or hierarchy (item unit) is associated with the operation item of a lower level layer or hierarchy (item unit). In other words, respective item units 100, 102, 104, 106, 108 including the operation items are hierarchized in a multi-layer way. The specific button is a button a hierarchy displayed on a top screen which is the item unit 100 in this embodiment. In this embodiment, the preference button of the item unit 100 is the specific button; however, it is not limited to this.

In this embodiment, the item units 100, 102, 104, 106, 108 are presented in five hierarchies. In particular, the item unit 100 is a first hierarchy, the item unit 102 is a second hierarchy, the item unit 104 is a third hierarchy, the item unit 106 is a fourth hierarchy and the item unit 108 is a fifth hierarchy. However, the number of hierarchies is not limited to five.

In this embodiment, the operation items of the item unit 100 are associated with the operation items of the item unit 102, the operation items of the item unit 102 are associated with the operation items of the item unit 104, the operation items of the item unit 104 are associated with the operation items of the item unit 106, and the operation items of the item unit 106 are associated with the operation items of the item unit 108.

When an operation item is selected while one or more operation item in an item unit is displayed, the control device 18 displays the operation items associated with the selected operation item, which is one or more operation item included in the lower level hierarchy of the one item unit. For example, the control device 18 displays the operation items (the operation items of the item unit 102 in this embodiment) associated with the specific button (the button of the item unit 100 in this embodiment) when the specific button is operated on an operation start screen. The control device 18 repeats display of the item units and display of operation item associated with the selected operation item.

The control device 18 controls the operations of the indoor units 12a, 12b based on a content of the detected operation when the operation unit detects that the operation item of the item unit 108 is selected while the operation items of the item unit 108, a lowest hierarchy, are displayed. In other words, the control device 18 controls the operations of the indoor units 12a, 12b by performing the content of the detected operation item.

As illustrated in FIG. 4, the air conditioning system 10 requires inputting five times of operation into the operation device 16 in order to start the absence operation. When it is known where on the menu the operation items for the absence operation are to be displayed, it is possible to promptly start processing. In contrast, operation while searching on the menu may take a longer time.

Next, exemplary control for switching operation modes using the preference button that has been set by the preference function and exemplary setting processing for the preference button will be described with reference to FIG. 5. The example in FIG. 5 illustrates the case where the absence operation has been set as an operation item for the preference button.

The control device 18 initially displays a top screen. The control device 18 displays an item unit 110 at the top screen. The item unit 110 displays a main button, a menu button, an operation button, and a preference button similar to those on the item unit 100. The button of the item unit 110, in this embodiment, the main button, the menu button, the operation button and the preference button, corresponds to the specific button. However, it is not limited to this.

When the preference button is pressed while the item unit 110 is being displayed, the control device 18 displays an item unit 112. The item unit 112 includes, as operation items, start/stop and preference button setting. The start/stop is provided to switch start and stop of the absence operation that has been set as a preference function. The preference button setting is provided to perform operation for setting the preference button. When the start/stop is operated while the item unit 112 is being displayed, the control device 18 starts the absence operation when the absence operation is not functioning, or stops the absence operation when the absence operation is functioning.

When the preference button setting is operated while the item unit 112 is being displayed, the control device 18 displays an item unit 114. The item unit 114 includes, as operation items, function setting and target indoor unit selection. The function setting is provided to set operation items to be set as the preference function. The indoor unit selection is provided to select a target indoor unit to which function setting is to be applied.

The control device 18 displays the operation items associated in a multi-layer way and controls the operations of the indoor units 12a and 12b based on the operations which the operation unit detects while the operation items are displayed. In particular, respective items 110, 112, 114 including the operation items are layered or hierarchized, and the operation item of a layer or hierarchy (item unit) is associated with the operation item of a lower level layer or hierarchy (item unit). In other words, respective items 110, 112, 114 including the operation items are hierarchized in a multi-layer way.

In the control example in which operation modes are switched by using a preference button set in preference functions, the item units 110, 112, 114 are three-layered. In particular, the item unit 110 is a first hierarchy, the item unit 112 is a second hierarchy and the item unit 114 is a third hierarchy. The number of the hierarchy is not limited to five.

In this control example, the control device 18 may associate an item displayed by two times of operations from the operation start screen, which is the operation item, to the operation item associated with the specific button (in this embodiment, the button of the item unit 110). The operation item associated with the specific button (in this embodiment, the button of the item unit 110) and the associated operation item may be the item (operation item) displayed by two or more times of operations from the operation start screen.

Next, operation when the preference button is operated will be described with reference to FIG. 6. Processing illustrated in FIG. 6 can be achieved by performing processing based on the operation detected on the operation device 16 by the control device 18. Processes illustrated in FIG. 6 shows an example of operation method of an air conditioning system of the embodiment.

The control device 18 displays the top screen (step S30). This processing corresponds to display of the item unit 110 illustrated in FIG. 5. After displaying the top screen, the control device 18 determines whether the preference button has been operated (step S32). Herein, the preference button includes the preference button displayed on the top screen as well as the preference buttons 36a and 36b. The control device 18 finishes the processing when it determines that the preference button has not been operated (No in step S32).

The control device 18, when it determines that the preference button has been operated (Yes in step S32), displays the preference operation screen (step S34). This processing corresponds to display of the item unit 112 illustrated in FIG. 5.

After displaying the preference operation screen, the control device 18 determines whether the start/stop button has been operated (step S36). The preference operation screen displays the start/stop button for the preference function. This determination is thus to determine whether the start/stop button for the preference function has been operated.

The control device 18, when it determines the start/stop button has been operated (Yes in step S36), switches operation start/stop for the mode that has been set to the preference function (step S38).

The control device 18, when it determines that the start/stop button has not been operated (No in step S36), determines whether the setting button (button used for preference button setting) has been operated (step S40). The control device 18 when it determines that the setting button has not be operated (No in step S40), finishes the processing.

The control device 18, when it determines that the setting button has been operated (Yes in step S40), performs setting processing for setting the preference function (step S42).

In this manner, the preference button is provided in the air conditioning system 10. By operating the preference button to switch start and stop of the operation associated with the preference button, it is possible for a user to perform operation simply by operating the preference button. With this configuration, the user can easily switch on/off of the set operation item. In other words, it is possible to perform desired operation with less number of times of operation without selecting items from the menu, as illustrated in FIG. 4.

The control device 18 determines a plurality of operation items (functions) to be targets of the preference function. The operation item for the preference function is the operation to switch start and stop of the target operation. Examples of operation items displayed as the preference function includes high-power operation, energy-saving operation, user-setting operation, peak-cut operation, grille lifting, ventilation, absence operation, quiet operation, filter sign reset, and take-a-look. The high-power operation is a mode for temporarily increasing operation capability so as to perform air conditioning to reach a set temperature in a short time. Specifically, the high-power operation is the operation that increases a rotation speed of the compressor and wind volume so as to boost the capability. The energy-saving operation is a mode for performing operation for energy saving without losing comfortability, in which temperature is fixed at 28°C during cooling, at 22°C during heating, and capability is automatically controlled depending on an outdoor temperature. Herein, the temperatures are given as an example. Specifically, the rotation speed of the compressor, wind volume, and wind direction are controlled according to the outdoor temperature and room temperature setting so as to permit operation with maximum performance coefficient. The user setting operation is a mode of operation performed with a set temperature, a wind volume, and an operation mode that have been previously set by the user. The peak-cut operation is operation that suppresses power consumption. The grille lifting is a mode for lifting a suction grille. The ventilation is a mode in which ventilation operation is performed. The absence operation is an operation mode for maintaining the temperature such that the room may be kept at a temperature no higher than and no lower than a predetermined temperature. Herein, the predetermined temperatures to be set as standards for high or low temperatures have a certain difference. The quiet operation is a mode of operation that prioritizes quietness in operation. Specifically, the rotation speed of the compressor is decreased and wind volume is restricted. The filter sign reset is a mode for inputting operation to reset filter cleaning displayed when a total operation time of the indoor unit that has been set to notify that an air filter cleaning timing reaches a set time. The take-a-look is a mode available for confirming operation time, power consumption, or the like. The take-a-look, when selected, displays the room temperature (sucking temperature), the outdoor temperature, operation time period, power consumption, or the like.

The control device 18 may set the plurality of preference functions and may display the plurality of operation items on the preference operation screen. In this case, the control device 18 displays a screen 130 as illustrated in FIG. 7, on the operation device 16. The screen 130 includes operation items 132, 134, and 136, as well as a back button 138. Each of the operation items 132, 134, and 136 includes a start button 140 and a setting button 142. The screen 130 may display the preference button setting for performing preference button setting operation. The start button 140 is associated with operation that starts each of the operation items 132, 134, and 136. The setting button 142 is selected when operation items to be described later are associated with the preference buttons 36a and 36b.

Next, preference function setting processing will be described with reference to FIGS. 8 to 11. Processes illustrated in FIG. 8 shows an example of operation method of an air conditioning system of the embodiment. The control device 18 displays a setting screen (step S60). Herein, the setting screen is a screen that displays operation items that can be set as the preference function as a screen 150 illustrated in FIG. 9.

The control device 18 displays the setting screen and then determines whether the function setting has been operated (step S62). The control device 18 proceeds to step S70 when it determines that the function setting has not been operated (No in step S62). The control device 18, when it determines that the function setting has been operated (Yes in step S62), that is, determines that the operation item has been selected, sets the item that has received function setting as the operation item (operation target item for the preference function) (step S64).

The control device 18, after setting the item that has received function setting as the operation item, determines whether a target indoor unit has been specified. (step S66). That is, the control device 18 determines whether the target indoor unit for execution of the operation item function has been set.

The control device 18, when it determines the target indoor unit has not been specified (No in step S66), performs setting processing for the target indoor unit (step S68), and proceeds to step S74. The setting processing for the target indoor unit is the processing to display the indoor units and then select the target indoor unit, among the indoor units.

The control device 18, when it determines that the target indoor unit has been specified (Yes in step S66), or determination has been No in step S62, determines whether setting for the target indoor unit has been operated (step S70).

The control device 18, when it determines that the setting for target indoor unit has not been operated (No in step S70), proceeds to step S74. The control device 18 performs setting processing for the target indoor unit (step S72) when it determines that the setting for the target indoor unit has been operated (Yes in step S70).
For example, when the indoor selection button is operated while the screen 152 illustrated in FIG. 10 is being displayed, the control device 18 displays the screen 154 for selecting the indoor unit. The screen 152 is a screen for setting high-power operation as an operation item. The screen 154 displays a button indicating a number associated with each of the indoor units. When the number of the indoor unit is selected and then a determination button is pressed while the screen 154 is being displayed, the control device 18 associates the selected indoor unit with the high-power operation, as the preference function.

The control device 18, when it has performed processing of step S68 or step S72, determines whether to finish processing (step S74). The control device 18, when it determines not to finish processing (No in step S74), returns to step S62, and performs processing of steps S62 to S74. The control device 18, when it determines to finish processing (Yes in step S74), updates the preference function setting according to the executed operation (step S76).

In this manner, the air conditioning system 10 allows setting of operation items of the preference function, enabling the user to set one's desired operation to the function associated with the preference button. Moreover, the target operation is configured to be a single operation, namely, start and stop switching operation, making it possible to simplify the operation, unify the display screen, and making operation understandable to the user.

With the air conditioning system 10, the indoor unit for setting is selected among the plurality of indoor units, and the selecting result may be set as the operation item. This configuration makes it possible to perform operation to collectively start the desired indoor unit in a desired mode. Furthermore, the air conditioning system 10 performs setting such that a separate function is associated with each of the plurality of indoor units. Accordingly, it is possible to easily switch start and stop of a mode simply by previous setting performed by the user.

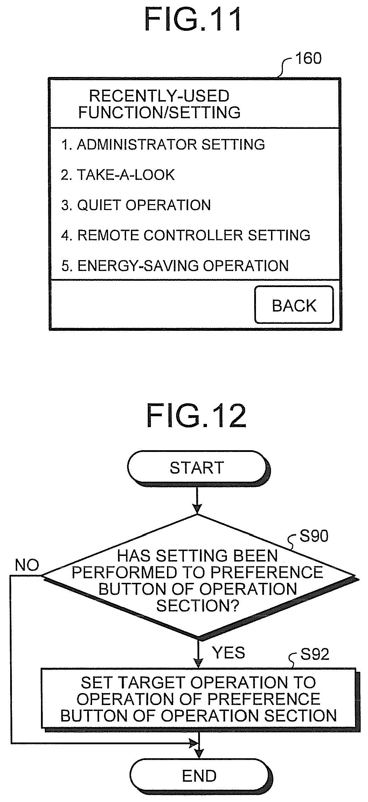

Herein, the control device 18 may extract operation item that has been used recently and settable as a preference function based on the history data 56, and may display as a target operation item when the preference function setting is performed. For example, the control device 18 may display a screen 160 illustrated in FIG. 11, and determine an operation item to set as the preference function from among the displayed operation items. With this, it is possible to set the actually operated item to the preference function without detecting from a menu display, and it is possible for the user to easily set the preference function.

FIG. 12 is a flow chart illustrating exemplary operation of the air conditioning system. Processes illustrated in FIG. 6 shows an example of operation method of an air conditioning system of the embodiment. Herein, the air conditioning system 10 may associate the operation items of the preference function with the preference buttons 36a and 36b. The control device 18 performs processing illustrated in FIG. 12 at preference function setting. The control device 18 determines whether setting has been performed to the preference buttons 36a and 36b of the operation section (step S90). The control device 18, when it determines no setting has been performed (No in step S90), finishes the processing. The control device 18, when it determines setting has been performed (Yes in step S90), sets the target operation to the operation of the preference buttons 36a and 36b of the operation section (step S92). That is, the control device 18 associates a specified operation item of the preference function with any of the preference buttons 36a and 36b. For example, if the above-described setting button 142 has been operated at any of the preference functions, the operation item for that specified preference function is associated with any of the preference buttons 36a and 36b.

The control device 18 associates the operation item for the specified preference function with the preference buttons 36a and 36b. This configuration makes it possible for the user to switch start and stop of the desired operation item simply by operating the preference buttons 36a and 36b. Accordingly, the user can easily switch start and stop of the desired operation item that has been set. Furthermore, if specific operation has been associated with the preference buttons 36a and 36b, displaying the preference button on the touch panel display device 32 enables execution of operation of displaying the preference function that has been set to the above-described touch panel display device 32.

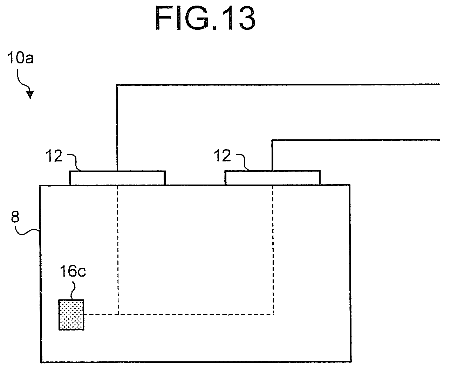

Herein, in the air conditioning system 10 illustrated in FIG. 1, the control device 18 is provided separately from other devices. The configuration, however, is not limited to this. FIG. 13 is a schematic diagram illustrating an outline configuration of the air conditioning system according to another embodiment. An air conditioning system 10a includes the two indoor units 12 and an operation device 16c in the room 8. The air conditioning system 10a, similarly to the air conditioning system, also includes an outdoor unit, which is not illustrated. The operation device 16c of the air conditioning system 10a controls the two indoor units 12 and the outdoor unit. The operation device 16c has a function of the control device 18. That is, the operation device 16c of the air conditioning system 10a has the functions of the operation device and the control device of the air conditioning system 10. In this manner, the operation device and the control device may be combined into one device.

### Reference Signs List

8 room
10, 10a air conditioning system
12, 12a, 12b indoor unit
14, 14a, 14b outdoor unit
16, 16a, 16b, 16c operation device
18 control device
30 housing
32 touch panel display device
34 operation button
36a, 36b preference button
50 operation control unit
52 preference function setting unit
54 preference function table
56 history data

## Claims

1. An air conditioning system (10; 10a) comprising:
at least one indoor unit (12; 12a, 12b);
a control device (18) configured to control the indoor unit (12; 12a, 12b);
an operation device (12; 12a, 12b; 16c) including a display section (32) configured to display an operation screen and an operation section (34, 36a, 36b) configured to input an operation,
wherein the operation section (34, 36a, 36b) includes a specific button, and
wherein the control device (18) is configured to
switch an item displayed on the display section (32) and display an operation item associated in a multi-layer based on the operation to the operation section (34, 36a, 36b), control the operation of the indoor unit (12; 12a, 12b) based on the operation detected by the operation section (34, 36a, 36b) while the operation item is being displayed,
be capable of associating the item displayed by two or more times of operation from an operation start screen with the operation item associated with the specific button, and
display the operation item associated with the specific button in a case where the specific button has been operated at a time of displaying the operation start screen.

2. The air conditioning system (10; 10a) according to claim 1, comprising:
the plurality of indoor units (12; 12a, 12b),
wherein the control device (18) is configured to be capable of associating operation for each of the plurality of indoor units (12; 12a, 12b) with the operation items associated with the specific button.

3. The air conditioning system (10; 10a) according to claim 2,
wherein the control device (18) is configured to be capable of associating operation for each of the plurality of indoor units (12; 12a, 12b) with one operation item associated with the specific button.

4. The air conditioning system (10; 10a) according to any one of claims 1 to 3,
wherein the control device (18) is configured to be capable of associating a plurality of operation items to the operation item associated with the specific button.

5. The air conditioning system (10; 10a) according to any one of claims 1 to 4,
wherein the control device (18) is configured to be capable of associating a plurality of operation items to one operation item associated with the specific button.

6. The air conditioning system (10; 10a) according to any one of claims 1 to 5,
wherein the control device (18) includes history data (56) storing a history of an operation item operated on the operation device (12; 12a, 12b; 16c), and when the control device (18) has detected operation for setting the operation item associated with the specific button, the control device (18) is configured to display the operation item extracted based on the history data (56).

7. The air conditioning system (10; 10a) according to any one of claims 1 to 6, wherein the operation item associated with the specific button is an item configured to switch start and stop of a function.

8. The air conditioning system (10; 10a) according to any one of claims 1 to 7,
wherein the operation section (34, 36a, 36b) includes a touch panel laminated at the display section (32), and
the specific button is a physical switch arranged in a position not overlapping with the display section (32).

9. An operation device (12; 12a, 12b; 16) for operating a control device (18) of an air conditioning system (10; 10a) comprising:
a display section (32) configured to display an operation screen; and
an operation section (34, 36a, 36b) configured to input an operation,
wherein the operation section (34, 36a, 36b) includes a specific button.

10. The operation device (12; 12a, 12b; 16) according to claim 1, comprising:
the specific button included by the operation section (34, 36a, 36b)
wherein the control device (18) is configured to be capable of associating operation for each of the plurality of indoor units (12; 12a, 12b) with the operation items associated with the specific button.

11. An operation method for an air conditioning system (10; 10a) including at least one indoor unit (12; 12a, 12b), a control device (18) configured to control the indoor unit (12; 12a, 12b), an operation device (12; 12a, 12b; 16c) including a display section (32) configured to display an operation screen and an operation section (34, 36a, 36b) configured to input an operation, wherein
when the operation section (34, 36a, 36b) operates the air conditioning system including a specific button,
the control device
associates the item displayed by two or more times of operation from an operation start screen to the operation item associated with the specific button,
switches an item displayed on the display section (32) and display an operation item associated in a multi-layer based on the operation to the operation section (34, 36a, 36b), control the operation of the indoor unit (12; 12a, 12b) based on the operation detected by the operation section (34, 36a, 36b) while the operation item is being displayed, and
displays the operation item associated with the specific button in a case where the specific button has been operated at a time of displaying the operation start screen.
